# FASCICULE DE BREVET EUROPEEN

(11) **EP 3 102 369 B1**
(45) Date de publication et mention de la délivrance du brevet: **11.04.2018**
(21) Numéro de dépôt: 15700754.3
(22) Date de dépôt: 22.01.2015
(51) Int. Cl.: B25J 15/00, B25J 15/12

(54) **MAIN DESTINÉE À ÉQUIPER UN ROBOT À CARACTÈRE HUMANOÏDE À DOIGTS AMÉLIORÉS**
HAND ZUR BEREITSTELLUNG AN EINEM HUMANOIDEN ROBOTER MIT VERBESSERTEN FINGERN
HAND INTENDED FOR BEING PROVIDED ON A HUMANOID ROBOT WITH IMPROVED FINGERS

(30) Priorité: 22.01.2014 FR 1450532
(43) Date de publication de la demande: 14.12.2016
(73) Titulaire: Softbank Robotics Europe, 75015 Paris (FR)
(72) Inventeur: LAVILLE, Jérémy, F-75015 Paris (FR); CLERC, Vincent, F-92140 Clamart (FR); MAISONNIER, Bruno, F-75014 Paris (FR)
(74) Mandataire: Collet, Alain
(86) Numéro de dépôt international: PCT/EP2015/051236
(87) Numéro de publication internationale: WO 2015/110522

(56) Documents cités:
- WO-A1-2014/045433
- WO-A1-2014/074840
- WO-A2-2008/058061
- WO-A2-2012/042054
- DE-B3-102006 009 559
- FR-A5- 2 065 112
- JP-A- 2011 050 529
- KR-A- 20110 005 146
- US-A- 4 466 649

## Description

L'invention concerne une main destinée à équiper un robot à caractère humanoïde.

La main humaine est une partie du corps humain extrêmement complexe. Elle comprend plusieurs doigts articulés autour de la paume de la main. Par ailleurs chaque doigt possède plusieurs phalanges articulées entre elles. Chaque articulation est motorisée au moyen de muscles. Les différentes articulations de la main permettent notamment la préhension d'objets de formes diverses. De nombreuses tentatives ont été réalisées dans des robots humanoïdes afin de se rapprocher au mieux des fonctionnalités humaines. La reproduction des mouvements de la main dans un robot nécessite un grand nombre d'actionneurs indépendants pour assurer la préhension d'objets divers. Ceci augmente la complexité du robot tant au niveau du nombre d'actionneurs indépendants à prévoir qu'au niveau du pilotage de ces différents actionneurs que l'on doit commander de façon coordonnée.

Le document WO 2008/058061 A2 décrit un exemple de main robotisée.

L'invention vise à simplifier la réalisation d'une main d'un robot humanoïde tout en conservant son adaptation à la préhension d'objet de différentes formes.

A cet effet, l'invention a pour objet une main destinée à équiper un robot humanoïde, la main comprenant une paume et au moins un doigt articulé à la paume, le doigt comprenant au moins une phalange et au moins une articulation reliant la phalange à la paume, la phalange s'étendant selon une direction principale, caractérisée en ce que l'articulation comprend une pièce de jonction élastique permettant plusieurs degrés de liberté, en ce que la main comprend des moyens de motorisation d'un degré de liberté en rotation parmi les degrés de liberté rendus possibles par la pièce de jonction, le degré de liberté en rotation motorisé permettant un mouvement relatif autour d'un axe perpendiculaire à la direction principale de la phalange et en ce que les autres degrés de liberté parmi les degrés de liberté rendus possibles par la pièce de jonction ne sont pas motorisés.

Chaque doigt de la main peut comprendre plusieurs phalanges consécutives, deux phalanges consécutives étant reliées par une articulation comprenant une pièce de jonction élastique semblable à la pièce de jonction reliant la phalange à la paume.

Chaque pièce de jonction élastique possède avantageusement une position neutre définie de façon à ce que les moyens de motorisation permettent un débattement angulaire de l'articulation comprenant la pièce de jonction élastique considérée de part et d'autre de la position neutre.

Dans l'invention, la présence d'une pièce de jonction élastique dans chaque articulation permet d'améliorer la compliance du doigt vis-à-vis de la forme des objets qu'il est susceptible de rencontrer. On entend par compliance du doigt, sa capacité à s'ajuster aux contraintes et aux forces qui s'exercent sur lui.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective une main destinée à équiper un robot humanoïde ;
la figure 2 représente en perspective un doigt équipant la main de la figure 1 ;
la figure 3 représente le doigt de la figure 2 en coupe longitudinale ;
la figure 4 représente une vue éclatée du doigt de la figure 2 ;
la figure 5 représente le doigt de la figure 2 en coupe transversale.
les figures 6A et 6B représentent la compliance d'un doigt lorsqu'il rencontre un obstacle.

Par souci de clarté, les mêmes éléments porteront les mêmes repères dans les différentes figures.

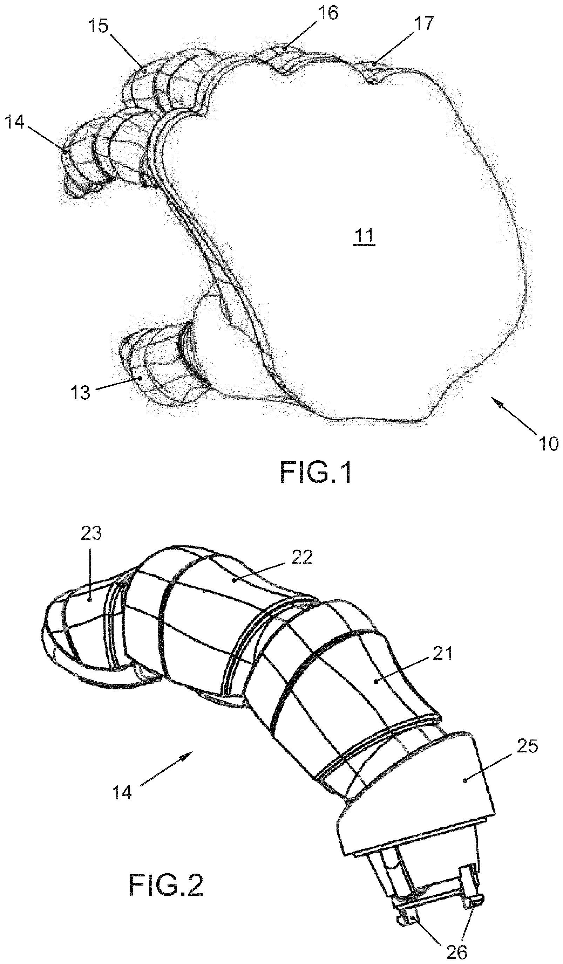

La figure 1 représente une main 10 destinée à équiper un robot humanoïde. La main 10 comprend une paume 11 et cinq doigts 13 à 17. Les doigts sont articulés à la paume 11 de façon à permettre la préhension d'objets entre les doigts 13 à 17. A l'image d'une main humaine, le doigt 13 est un pouce. Un objet saisi par la main est maintenu entre le pouce 13 et les autres doigts 14 à 17. L'invention n'est pas limitée à une main possédant cinq doigts. Il est possible de réduire le nombre de doigts pour simplifier la conception de la main ou même d'augmenter le nombre de doigts pour permettre la préhension d'objets particuliers.

La figure 2 représente en perspective un doigt équipant la main 10. Il s'agit de l'index 14 comprenant trois phalanges consécutives 21, 22 et 23. Les phalanges sont articulées en série par rapport à la paume 11 de la main 10. Plus précisément, la phalange 21 est articulée sur la paume 11. La phalange 22 est articulée sur la phalange 21. La phalange 23 est articulée sur la phalange 22 et forme l'extrémité libre du doigt 14. Les trois phalanges 21, 22 et 23 sont définies à l'image d'un doigt humain. Comme précédemment pour le nombre de doigts, sans sortir du cadre de l'invention, il est possible de définir un doigt possédant un autre nombre de phalanges, en réduisant le nombre pour faciliter la conception de la main ou en augmentant le nombre pour des utilisations particulières de la main.

De façon plus générale, une main de l'invention peut être formée d'une pince permettant de saisir un objet. La pince comprend au moins un doigt mobile équipé de plusieurs phalanges articulées permettant plusieurs points de contact avec l'objet saisi. En regard de ce doigt articulé, il est possible de disposer un doigt fixe ou même directement la paume de la main.

On a vu plus haut que la phalange 21 est articulée sur la paume 11. Sur la figure 2, on distingue une pièce d'encastrement 25 destinée à être solidarisée à la paume 11 par exemple au moyen de clips 26. L'articulation du doigt 14 est réalisée ente la phalange 21 et la pièce d'encastrement 25. D'un point de vue fonctionnel, la pièce d'encastrement 25 fait partie intégrante de la paume 11.

La description qui suit décrit l'index 14. Il est bien entendu que l'invention peut être mise en oeuvre pour chacun des doigts 14 à 17 et même pour le pouce 13.

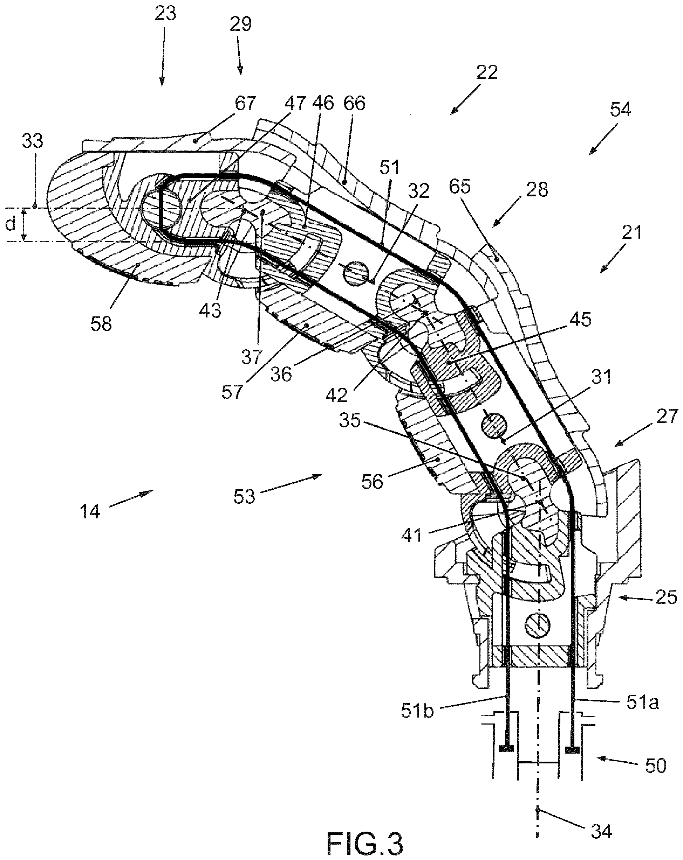

La figure 3 représente le doigt 14 en coupe longitudinale. L'articulation entre la pièce d'encastrement 25 et la phalange 21 porte le repère 27. L'articulation entre les phalanges 21 et 22 porte le repère 28 et l'articulation entre les phalanges 22 et 23 porte le repère 29.

Dans l'exemple représenté, les autres doigts 13, 15, 16 et 17 sont semblables au doigt 14. Ils comprennent chacun plusieurs phalanges articulées, par exemple trois phalanges pour se rapprocher de l'anatomie humaine.

Chacune des phalanges 21, 22 et 23 s'étend selon une direction principale, respectivement 31, 32 et 33. Le doigt 14 comprend des pièces de jonction élastiques permettant d'articuler les phalanges entre elles ainsi que la première phalange 21 à la paume 11. Les pièces de jonction forment les articulations 27, 28 et 29. Plus précisément, une pièce de jonction 35 relie la pièce d'encastrement 25, et donc la paume 11, à la première phalange 21. Une pièce de jonction 36 relie les phalanges 21 et 22. Une pièce de jonction 37 relie les phalanges 22 et 23. La pièce de jonction 35 permet plusieurs degrés de liberté, entre la première phalange 21 et la paume 11. Les pièces de jonction 36 et 37 permettent plusieurs degrés de liberté entre deux phalanges consécutives que chacune des pièces de jonction 36 et 37 relie. Les pièces de jonction 35, 36 et 37 sont formées chacune d'un bloc de matériau élastique encastré dans des pièces rigides entre lesquelles elles sont disposées. Une pièce de jonction autorise plusieurs degrés de liberté entre les deux pièces rigides qu'elle relie, principalement les trois rotations mais aussi les trois translations avec des débattements faibles.

Pour chacune des articulations 27, 28 et 29, une des rotations est motorisée et les autres degrés de liberté rendus possibles par la pièce de jonction considérée ne sont pas motorisés. Autrement dit, la main 10 comprend des moyens de motorisation d'un degré de liberté en rotation parmi les degrés de liberté rendus possibles par la pièce de jonction de l'articulation considérée.

La rotation motorisée se fait autour d'un axe perpendiculaire aux directions principales des deux phalanges voisines, c'est-à-dire un axe 42 pour l'articulation 28 et un axe 43 pour l'articulation 29. Pour l'articulation 27, entre la première phalange 21 et la paume 11, la rotation motorisée se fait autour d'un axe 41 perpendiculaire à la direction 31 et perpendiculaire à un axe 34 formant une direction principale de la pièce d'encastrement 25. La direction principale 34 est fixe par rapport à la paume 11.

Les différents degrés de liberté autorisés par une pièce de jonction permettent une certaine souplesse du doigt 14 pour s'adapter à la forme d'objets divers que la main 10 est susceptible d'attraper ou de heurter Cette souplesse permet d'améliorer la compliance de la main vis-à-vis de la forme des objets qu'elle est susceptible de rencontrer. Grâce à l'invention, la main améliore sa capacité à s'ajuster aux contraintes et aux forces qui s'exercent sur elle.

Les différentes pièces de jonction élastiques 35, 36 et 37 peuvent être identiques et donc posséder une raideur identique. Alternativement, les différentes pièces de jonction élastiques 35, 36 et 37 possèdent chacune une raideur décroissante en s'éloignant de la paume 11. Cette raideur décroissante permet de moduler l'effort que chaque phalange 21, 22 et 23 exerce sur un objet saisi par la main 10.

La raideur de chaque articulation peut différer selon les degrés de liberté permis par l'articulation concernée. La raideur décroissante peut ne concerner que le degré de liberté motorisé et/ou les autres degrés de liberté non motorisés.

Chaque phalange comprend une armature rigide. Plus précisément, la phalange 21 comprend une armature rigide 45, la phalange 22 comprend une armature rigide 46 et la phalange 23 comprend une armature rigide 47. La pièce de jonction 35 est encastrée dans la pièce d'encastrement 25 et dans l'armature rigide 45. La pièce de jonction 36 est encastrée dans les armatures rigides 45 et 46. La pièce de jonction 37 est encastrée dans les armatures rigides 46 et 47. La souplesse des pièces de jonction 35, 36 et 37 peut être obtenue entre les encastrements de chacune. On peut réaliser les trois pièces de jonction 35, 36 et 37 dans le même matériau, comme par exemple un matériau à base de silicone. La raideur décroissante peut être obtenue en amincissant les pièces de jonction entre leurs encastrements respectifs. De façon plus générale, la raideur de chaque articulation peut être obtenue par la définition de la forme de la pièce de jonction considérée.

La motorisation selon un seul degré de liberté peut se faire de façon autonome pour chacune des articulations entre les phalanges et entre la paume 11 et la première phalange 21. Avantageusement les moyens de motorisation comprennent un actionneur commun 50 pour toutes les articulations 27, 28 et 29 du doigt 14. L'actionneur commun 50 permet de simplifier la conception et le pilotage de la main. Associé à la raideur décroissante des pièces de jonction 35, 36 et 37, l'actionneur commun 50 permet d'améliorer la préhension d'objets saisis par la main 10 en permettant de mieux refermer l'extrémité du doigt sur l'objet. Plus précisément, pour une même commande de l'actionneur commun 50, du fait de la raideur décroissante des pièces de jonction 35, 36 et 37, on obtiendra un déplacement angulaire croissant de chacune des articulations 27, 28 et 29 en s'éloignant de la paume 11. La raideur décroissante associée à un actionneur commun permet aussi d'obtenir une cinématique de fermeture et d'ouverture progressive de toutes les articulations d'un doigt. Cette cinématique est proche de celle d'un doigt humain, lequel est mu par des muscles indépendants. Un doigt conforme à l'invention et mu par un actionneur unique est beaucoup plus facile à piloter qu'un doigt robotisé possédant autant d'actionneurs que de phalanges.

A titre d'exemple de réalisation mettant en oeuvre un actionneur commun 50, les moyens de motorisation comprennent un câble 51 guidé dans chaque armature rigide 45, 46 et 47 ainsi que dans la pièce d'encastrement 25. Le câble 51 transite de la pièce d'encastrement 25 à la première phalange 21 ainsi que d'une phalange à la suivante à distance de l'axe du degré de liberté en rotation motorisé. Le câble 51 est actionné par l'actionneur commun 50. On a représenté sur la figure 3 une distance d espaçant l'axe 43 du guidage du câble 51 dans l'armature rigide 47 de la phalange 23. Cette distance d permet d'obtenir un couple moteur de l'articulation 29 lorsque le câble 51 est mis sous tension par l'actionneur commun 50.

Le câble 51 peut être encastré dans l'armature rigide 47 de la dernière phalange 23 et cheminer jusqu'à la paume 11 uniquement le long d'une face interne 53 du doigt 14, c'est-à-dire la face destinée à être en contact avec les objets à saisir. L'actionneur commun 50, disposé dans la paume 11 est alors un actionneur simple effet pouvant tirer sur le câble 51 pour refermer le doigt 14. Lorsque le câble 51 est relâché, la raideur des pièces de jonction 35, 36 et 37 permet de rouvrir le doigt 14. Alternativement, l'actionneur commun 50 peut être un actionneur double effet. Lorsqu'un câble 51 est mis en oeuvre, associé à un actionneur 50 double effet, le câble 51 chemine le long de la face interne 53 et long d'une face externe 54 du doigt 14, opposé à la face interne 53. Le cheminement du câble 51 peut se faire à même distance d des axes 41, 42 et 43 pour les deux faces 53 et 54 du doigt 14. L'actionneur 50 double effet peut alors tirer sur le câble 51 du coté de la face interne 53 pour refermer le doigt 14 ou du côté de la face externe 54 pour ouvrir le doigt 14.

L'effort que l'actionneur 50 exerce sur le câble 51 est proportionnel à la déformation élastique des différentes pièces de jonction 35, 36 et 37. L'effort maximum que l'actionneur pourra exercer sera obtenu soit pour un doigt complètement ouvert soit pour un doigt complètement fermé, c'est-à-dire à une des positions angulaires maximales des articulations 27, 28 et 29. Lorsque le doigt se referme sur un objet à saisir, il faut également tenir compte de l'effort que l'on souhaite exercer sur l'objet saisi pour le retenir dans la main 10.

Afin de limiter l'effort maximum que l'actionneur doit exercer, il est possible de définir une position neutre du doigt pour laquelle aucun effort n'est exercé sur le câble 51. Cette position neutre est fonction de la forme au repos de chacune des pièces de jonction 35, 36 et 37. Par exemple, chacune des pièces de jonction élastique 35, 36 et 37 possède une position neutre définie de façon à ce que les moyens de motorisation permettent un débattement angulaire de l'articulation 27, 28 ou 29 comprenant la pièce de jonction élastique 35, 36 ou 37 considérée de part et d'autre de la position neutre.

La position neutre peut être définie à mi course du doigt 14 entre ses deux positions extrêmes, complètement replié vers la paume 11 de la main 10 et en extension maximum lorsque les directions 31 à 34 sont alignées. Il est également possible de déplacer cette position neutre pour favoriser un des mouvements motorisés du doigt 14, vers son extension ou vers sont repliement. Par exemple, afin de permettre un effort suffisant du doigt sur un objet saisi, on peut définir la position neutre plus proche de la position extrême repliée que de la position en extension maximum.

Avantageusement, chaque phalange 21, 22 et 23 comprend une pièce souple, respectivement 56, 57 et 58 disposée sur la face interne 53 du doigt 14. Ces pièces souples, par exemple réalisées dans un matériau à base de silicone permettent, en se déformant au contact d'un objet saisi par la main 10, d'augmenter la surface de contact entre chacune des phalanges 21 22 et 23 et l'objet saisi. Le matériau choisi pour réaliser les pièces souples 56, 57 et 58 peut avoir des propriétés de surface permettant d'améliorer l'adhérence avec les objets saisis. Un matériau à base de silicone est bien adapté pour remplir cette fonction. De façon plus générale, les pièces souples, 56, 57 et 58 permettent d'améliorer la préhension d'un objet au moyen du doigt 14.

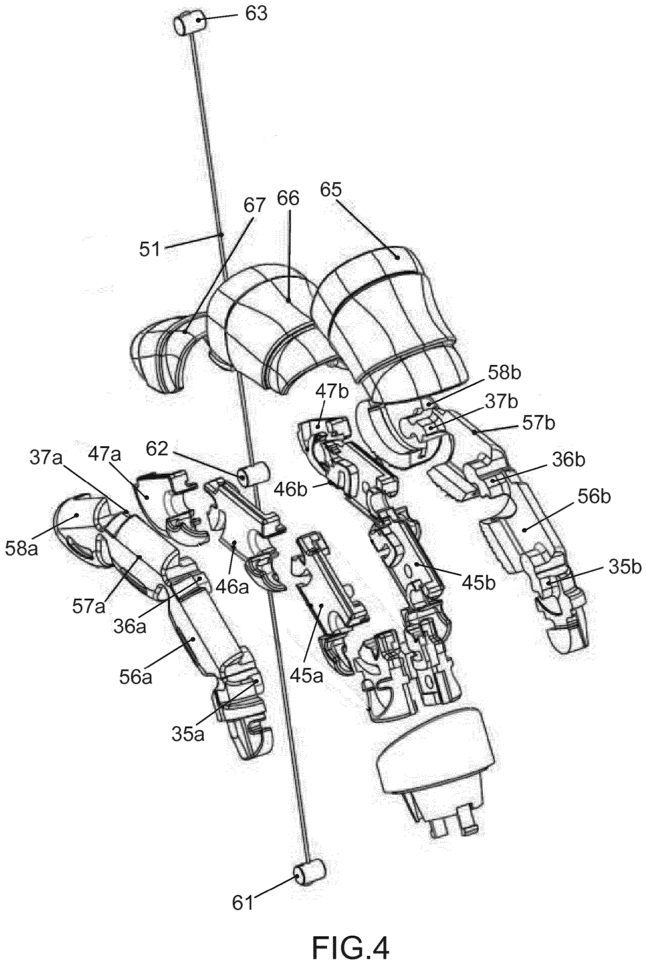

La figure 4 représente en perspective et en vue éclatée le doigt 14. Dans l'exemple représenté, pour chacune des phalanges 21, 22 et 23, l'armature rigide est formée de deux parties, respectivement 45a et 45b pour l'armature rigide 45, 46a et 46b pour l'armature rigide 46 et 47a et 47b pour l'armature rigide 47. Pour chaque armature, les deux parties permettent de faciliter le montage du doigt 14 afin de guider le câble 51 entre les deux parties. Pour chacune des phalanges 21, 22 et 23, les deux parties s'étendent principalement de part et d'autre de la direction principale de la phalange concernée.

Sur la figure 4, le câble 51 est représenté rectiligne avant son montage guidé entre les deux parties de chaque phalange. Le câble 51 comprend des embouts formant des excroissances fixées sur le câble 51 permettant chacune d'immobiliser un point du câble 51. Dans l'exemple représenté, le câble 51 peut être formé à partir d'un toron de fils d'acier sur lequel trois embouts 61, 62 et 63 sont moulés ou sertis. Les embouts 61 et 63 sont fixés chacun à une des extrémités du câble 51. Les embouts 61 et 63 permettent à l'actionneur 50, lorsqu'il est double effet de tirer sur chacune des extrémités du câble 51. L'embout 62 permet d'immobiliser le câble 51 dans l'armature rigide 47 de la dernière phalange 23 et l'embout 62 peut être fixé sensiblement au milieu du câble 51 ou de façon décalée par rapport au milieu en fonction de l'amplitude souhaitée des mouvements du doigt 14. Plus précisément, l'embout 62 est avantageusement positionné à l'extrémité de la dernière phalange 23. La figure 3 représente le doigt 14 en position médiane entre une position étendue où les directions 31 à 34 sont alignées et une position repliée vers la paume 11. Dans la position médiane, la longueur d'une partie 51a du câble 51 permettant l'extension du doigt 14 est plus importante que la longueur d'une partie 51b du câble 51 permettant le repliement du doigt 14. Les parties 51a et 51b du câble 51 sont situées de part et d'autre de l'embout 62.

Alternativement, il est possible de mettre en place deux câbles distincts agissant chacun vers une des positions extrêmes du doigt 14. Les deux câbles distincts correspondent à chacune des parties 51a et 51b.

Avantageusement, chaque phalange 21, 22 et 23 comprend une coque, respectivement 65, 66 et 67 recouvrant la face externe 54 du doigt 14.

Avantageusement, pour chacune des phalanges 21, 22 et 23, la coque et la pièce souple comprennent des formes complémentaires réalisées de façon à réaliser un encastrement de l'armature, de la pièce souple et de la coque. Il est possible de réaliser chaque encastrement par déformation de la pièce souple correspondante. On évite ainsi tout recours à un accessoire de fixation tel qu'une vis.

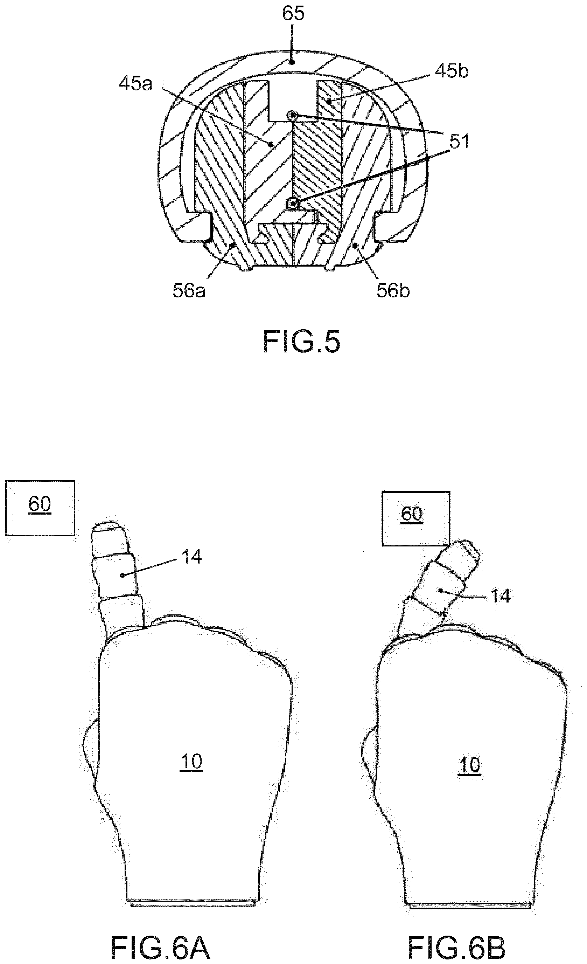

La figure 5 représente le doigt 14 en coupe transversale au niveau de la phalange 21. Les autres phalanges 22 et 23 présentent des coupes semblables.

Avantageusement, pour faciliter sa fabrication et son assemblage, pour chacune des phalanges 21, 22 et 23, la pièce souple est formée de deux parties entourant l'armature rigide. Plus précisément, la pièce souple 56 est formée de deux parties 56a et 56b. La pièce souple 57 est formée de deux parties 57a et 57b et la pièce souple 58 est formée de deux parties 58a et 58b. Les deux parties de chaque pièce souple entourent l'armature rigide. Pour chacune des phalanges 21, 22 et 23, les deux parties des pièces souples s'étendent principalement de part et d'autre de la direction principale de la phalange concernée. Cette disposition est bien visible sur la figure 5.

Avantageusement, les différentes pièces souples et les différentes pièces de jonction peuvent être réalisées en les regroupant par moitié longitudinalement. Les pièces de jonction élastiques 35, 36 et 37 peuvent être définies de façon à ce que les directions principales 31, 32 et 33 des différentes phalanges, ainsi que la direction principale 34 de la pièce d'encastrement 25, demeurent dans un plan appelé plan longitudinal du doigt 14 lorsqu'aucune contrainte n'est exercée sur les pièces de jonction 35, 36 et 37 selon leurs degrés de liberté non motorisés. Il s'agit du plan de coupe de la figure 3. Le regroupement par moitié se fait de part et d'autre du plan longitudinal.

Plus précisément, les pièces de jonction 35, 36 et 37 peuvent, comme pour les pièces souples 56, 57 et 58, être réalisées en deux parties. La pièce de jonction 35 est formée de deux parties 35a et 35b. La pièce de jonction 36 est formée de deux parties 36a et 36b. La pièce de jonction 37 est formée de deux parties 37a et 37b. On peut réaliser en une seule pièce moulée, par exemple en silicone, les parties 35a, 56a, 36a, 57a, 37a et 58a. De même, on peut regrouper en une seule pièce les parties 35b, 56b, 36b, 57b, 37b et 58b. Le fait de regrouper les différentes pièces permet de simplifier la fabrication du doigt en regroupant plusieurs fonctions dans une même pièce mécanique, à savoir l'amélioration de la préhension d'un objet au moyen du doigt 14 et la souplesse de chaque articulation du doigt 14.

Les figures 6A et 6B représentent la compliance d'un doigt lorsqu'il rencontre un obstacle. Sur la figure 6A, la main 10 est représentée avec son index étendu. Un objet 60 est situé à distance de la main 10, sans la toucher. La motorisation du doigt 14 permet au doigt 14 de se replier dans un mouvement sensiblement perpendiculaire au plan des figures 6A et 6B. Sur la figure 6B, l'index 14 entre en contact avec l'objet 60. Le mouvement relatif de la main 10 et de l'objet 60 se fait dans le plan des figures 6A et 6B. Dans l'exemple choisi, la motorisation du doigt 14 ne permet pas à la main d'éviter le contact avec l'objet 60. Les différentes pièces de jonction élastiques 35, 36 et 37 se déforment et permettent au doigt 14 d'accepter la contrainte extérieure due à la présence de l'objet 60 sans subir de dommage ou sans nécessiter un pilotage complexe du robot équipé de la main.

## Revendications

1. Main destinée à équiper un robot humanoïde, la main (10) comprenant une paume (11) et au moins un doigt (13, 14, 15, 16, 17) articulé à la paume, le doigt (13, 14, 15, 16, 17) comprenant au moins une phalange (21, 22, 23) et une articulation (27, 28, 29) reliant la phalange (21, 22, 23) à la paume (11), la phalange (21, 22, 23) s'étendant selon une direction principale (31, 32, 33), ladite articulation (27, 28, 29) comprenant une pièce de jonction (35, 36, 37) élastique permettant plusieurs degrés de liberté, ladite main (10) comprenant des moyens de motorisation (50, 51) d'un degré de liberté en rotation parmi les degrés de liberté rendus possibles par la pièce de jonction (35, 36, 37), le degré de liberté en rotation motorisé permettant un mouvement relatif autour d'un axe (41, 42, 43) perpendiculaire à la direction principale (31, 32, 33) de la phalange (21, 22, 23), les autres degrés de liberté parmi les degrés de liberté rendus possibles par la pièce de jonction (35, 36, 37) n'étant pas motorisés et **caractérisée en ce que** la pièce de jonction élastique (35, 36, 37) possède une position neutre définie de façon à ce que les moyens de motorisation permettent un débattement angulaire de l'articulation (27, 28, 29) comprenant la pièce de jonction élastique (35, 36, 37) considérée de part et d'autre de la position neutre.

2. Main selon la revendication 1, **caractérisée en ce que** le doigt (13, 14, 15, 16, 17) comprend plusieurs phalanges (21, 22, 23) consécutives, deux phalanges (21, 22, 23) consécutives étant reliées par une articulation (28, 29) **en ce que** la ou les articulations (28, 29) reliant deux phalanges (21, 22, 23) consécutives comprennent chacune une pièce de jonction (36, 37) élastique permettant plusieurs degrés de liberté entre les deux phalanges (21, 22, 23) consécutives, **en ce que** la main (10) comprend des moyens de motorisation (50, 51) d'un degré de liberté en rotation parmi les degrés de liberté rendus possibles par la pièce de jonction (36, 37) reliant les phalanges (21, 22, 23) consécutives, le degré de liberté en rotation motorisé permettant un mouvement relatif des deux phalanges (21, 22, 23) consécutives autour d'un axe (42, 43) perpendiculaire aux directions principales (31, 32, 33) des deux phalanges (21, 22, 23) consécutives, **en ce que** les autres degrés de liberté parmi les degrés de liberté rendus possibles par la pièce de jonction (36, 37) reliant les phalanges (21, 22, 23) consécutives ne sont pas motorisés et **en ce que** chaque pièce de jonction (36, 37) reliant les phalanges (21, 22, 23) consécutives possède une position neutre définie de façon à ce que les moyens de motorisation permettent un débattement angulaire de l'articulation (28, 29) comprenant la pièce de jonction élastique (36, 37) considérée de part et d'autre de la position neutre.

3. Main selon la revendication 2, **caractérisée en ce que** les différentes pièces de jonction élastiques (35, 36, 37) possèdent chacune une raideur décroissante en s'éloignant de la paume (11).

4. Main selon l'une quelconque des revendications 2 ou 3, **caractérisée en ce que** les moyens de motorisation comprennent un actionneur commun (50) à toutes les articulations (27, 28, 29) du au moins un doigt (13, 14, 15, 16, 17).

5. Main selon la revendication 4, **caractérisée en ce que** chaque phalange (21, 22, 23) comprend une armature rigide (45, 46, 47), **en ce que** les moyens de motorisation comprennent un câble (51) guidé dans chaque armature rigide (45, 46, 47), le câble (51) transitant d'une phalange (21, 22, 23) à la suivante à distance de l'axe (41, 42, 43) du degré de liberté en rotation motorisé et **en ce que** le câble (51) est actionné par l'actionneur commun (50).

6. Main selon la revendication 5, **caractérisée en ce que** l'armature rigide (45, 46, 47) est formée en deux parties (45a, 45b, 46a, 46b, 47a, 47b) entre lesquelles le câble (51) est guidé.

7. Main selon l'une quelconque des revendications 4 à 6, **caractérisée en ce que** l'actionneur commun (50) est un actionneur double effet.

8. Main selon l'une des revendications précédentes, **caractérisée en ce que** la phalange (21, 22, 23) comprend une armature rigide (45, 46, 47) et une pièce souple (56, 57, 58) disposée sur une face interne (53) du doigt (14).

9. Main selon la revendication 8, **caractérisée en ce que** la phalange (21, 22, 23) comprend une coque (65, 66, 67) disposée sur une face externe (54) du doigt (13, 14, 15, 16, 17) et **en ce que** la coque (65, 66, 67) et la pièce souple (56, 57, 58) comprennent des formes complémentaires réalisées de façon à réaliser un encastrement de l'armature rigide (45, 46, 47), de la pièce souple (56, 57, 58) et de la coque (65, 66, 67).

10. Main selon l'une quelconque des revendications 8 ou 9, **caractérisée en ce que** la pièce souple (56, 57, 58) est formée de deux parties (56a, 56b, 57a, 57b, 58a, 58b) entourant l'armature rigide (45, 46, 47).

11. Main selon l'une quelconque des revendications 8 à 10, **caractérisée en ce que** les pièces souples (56, 57, 58) et la ou les pièces de jonction (35, 36, 37) sont réalisées en les regroupant par moitié longitudinalement (35a, 56a, 36a, 57a, 37a, 58a ; 35b, 56b, 36b, 57b, 37b, 58b).

## Patentansprüche

1. Hand, mit der ein humanoider Roboter ausgestattet werden soll, wobei die Hand (10) eine Handfläche (11) und wenigstens einen an die Handfläche angelenkten Finger (13, 14, 15, 16, 17) umfasst, wobei der Finger (13, 14, 15, 16, 17) wenigstens ein Fingerglied (21, 22, 23) und ein das Fingerglied (21, 22, 23) mit der Handfläche (11) verbindendes Gelenk (27, 28, 29) umfasst, wobei das Fingerglied (21, 22, 23) in einer Hauptrichtung (31, 32, 33) verläuft, wobei das Gelenk (27, 28, 29) ein elastisches Verbindungsstück (35, 36, 37) umfasst, das mehrere Freiheitsgrade zulässt, wobei die Hand (10) Motorisierungsmittel (50, 51) mit einem Rotationsfreiheitsgrad unter den Freiheitsgraden umfasst, die durch das Verbindungsstück (35, 36, 37) ermöglicht werden, wobei der motorisierte Rotationsfreiheitsgrad eine relative Bewegung um eine Achse (41, 42, 43) lotrecht zur Hauptrichtung (31, 32, 33) des Fingerglieds (21, 22, 23) zulässt, wobei die anderen Freiheitsgrade unter den Freiheitsgraden, die durch das Verbindungsstück (35, 36, 37) ermöglicht werden, nicht motorisiert sind, und **dadurch gekennzeichnet, dass** das elastische Verbindungsstück (35, 36, 37) eine neutrale Position hat, so definiert, dass die Motorisierungsmittel einen Winkelausschlag des Gelenks (27, 28, 29) zulassen, umfassend das elastische Verbindungsstück (35, 36, 37), auf beiden Seiten der neutralen Position betrachtet.

2. Hand nach Anspruch 1, **dadurch gekennzeichnet, dass** der Finger (13, 14, 15, 16, 17) mehrere konsekutive Fingerglieder (21, 22, 23) umfasst, wobei zwei konsekutive Fingerglieder (21, 22, 23) durch ein Gelenk (28, 29) verbunden sind, dadurch, dass das eine oder die mehreren Gelenke (28, 29), die zwei konsekutive Fingerglieder (21, 22, 23) verbinden, jeweils ein elastisches Verbindungsstück (36, 37) umfassen, das mehrere Freiheitsgrade zwischen den beiden konsekutiven Fingergliedern (21, 22, 23) zulassen, dadurch, dass die Hand (10) Motorisierungsmittel (50, 51) eines Rotationsfreiheitsgrades unter den Freiheitsgraden umfasst, die durch das Verbindungsstück (36, 37) ermöglicht werden, das die konsekutiven Fingerglieder (21, 22, 23) verbindet, wobei der motorisierte Rotationsfreiheitsgrad eine relative Bewegung von zwei konsekutiven Fingergliedern (21, 22, 23) um eine Achse (42, 43) lotrecht zu den Hauptrichtungen (31, 32, 33) der konsekutiven beiden Fingerglieder (21, 22, 23) zulässt, dadurch, dass die anderen Freiheitsgrade unter den Freiheitsgraden, die durch das Verbindungsstück (36, 37) ermöglicht werden, das die konsekutiven Fingerglieder (21, 22, 23) verbindet, nicht motorisiert sind, und dadurch, dass jedes Verbindungsstück (36, 37), das die konsekutiven Fingerglieder (21, 22, 23) verbindet, eine neutrale Position hat, so definiert, dass die Motorisierungsmittel einen Winkelausschlag des Gelenks (28, 29) zulassen, umfassend das elastische Verbindungsstück (36, 37), auf beiden Seiten der neutralen Position betrachtet.

3. Hand nach Anspruch 2, **dadurch gekennzeichnet, dass** die verschiedenen elastischen Verbindungsstücke (35, 36, 37) jeweils eine abnehmende Steifigkeit ausgehend von der Handfläche (11) besitzen.

4. Hand nach Anspruch 2 oder 3, **dadurch gekennzeichnet, dass** die Motorisierungsmittel einen gemeinsamen Aktuator (50) an allen Gelenken (27, 28, 29) des wenigstens einen Fingers (13, 14, 15, 16, 17) umfassen.

5. Hand nach Anspruch 4, **dadurch gekennzeichnet, dass** jedes Fingerglied (21, 22, 23) eine steife Bewehrung (45, 46, 47) umfasst, dadurch, dass die Motorisierungsmittel ein Kabel (51) umfassen, das in jeder steifen Bewehrung (45, 46, 47) geführt wird, wobei das Kabel (51) von einem Fingerglied (21, 22, 23) zum nächsten in einem Abstand von der Achse (41, 42, 43) des motorisierten Rotationsfreiheitsgrads übergeht, und dadurch, dass das Kabel (51) durch den gemeinsamen Aktuator (50) betätigt wird.

6. Hand nach Anspruch 5, **dadurch gekennzeichnet, dass** die steife Bewehrung (45, 46, 47) aus zwei Teilen (45a, 45b, 46a, 46b, 47a, 47b) ausgebildet ist, zwischen denen das Kabel (51) geführt wird.

7. Hand nach einem der Ansprüche 4 bis 6, **dadurch gekennzeichnet, dass** der gemeinsame Aktuator (50) ein doppelwirkender Aktuator ist.

8. Hand nach einem der vorherigen Ansprüche, **dadurch gekennzeichnet, dass** das Fingerglied (21, 22, 23) eine steife Bewehrung (45, 46, 47) und ein elastisches Stück (56, 57, 58) umfasst, das auf einer Innenfläche (53) des Fingers (14) angeordnet ist.

9. Hand nach Anspruch 8, **dadurch gekennzeichnet, dass** das Fingerglied (21, 22, 23) eine Schale (65, 66, 67) umfasst, die auf einer Außenfläche (54) des Fingers (13, 14, 15, 16, 17) angeordnet ist, und dadurch, dass die Schale (65, 66, 67) und das elastische Stück (56, 57, 58) komplementäre Formen umfassen, so realisiert, dass eine Einbettung der steifen Bewehrung (45, 46, 47), des elastischen Stücks (56, 57, 58) und der Schale (65, 66, 67) realisiert wird.

10. Hand nach Anspruch 8 oder 9, **dadurch gekennzeichnet, dass** das elastische Stück (56, 57, 58) aus zwei Teilen (56a, 56b, 57a, 57b, 58a, 58b) gebildet ist, die die steife Bewehrung (45, 46, 47) umgeben.

11. Hand nach einem der Ansprüche 8 bis 10, **dadurch gekennzeichnet, dass** die elastischen Stücke (56, 57, 58) und das eine oder die mehreren Verbindungsstücke (35, 36, 37) realisiert werden, indem sie longitudinal in der Hälfte (35a, 56a, 36a, 57a, 37a, 58a; 35b, 56b, 36b, 57b, 37b, 58b) gruppiert werden.

## Claims

1. A hand intended for a humanoid robot, the hand (10) comprising a palm (11) and at least one finger (13, 14, 15, 16, 17) articulated to the palm, the finger (13, 14, 15, 16, 17) comprising at least one phalanx (21, 22, 23) and an articulation (27, 28, 29) linking the phalanx (21, 22, 23) to the palm (11), the phalanx (21, 22, 23) extending in a main direction (31, 32, 33), said articulation (27, 28, 29) comprising an elastic joining piece (35, 36, 37) allowing several degrees of freedom, said hand (10) comprising motorization means (50, 51) for a degree of freedom in rotation out of the degrees of freedom made possible by the joining piece (35, 36, 37), the motorized degree of freedom in rotation allowing a relative movement about an axis (41, 42, 43) at right angles to the main direction (31, 32, 33) of the phalanx (21, 22, 23), the other degrees of freedom out of the degrees of freedom made possible by the joining piece (35, 36, 37) not being motorized and **characterized in that** the elastic joining piece (35, 36, 37) has a neutral position defined in such a way that the motorization means allow an angular travel of the articulation (27, 28, 29) comprising the elastic joining piece (35, 36, 37) concerned on either side of the neutral position.

2. The hand as claimed in claim 1, **characterized in that** the finger (13, 14, 15, 16, 17) comprises several consecutive phalanges (21, 22, 23), two consecutive phalanges (21, 22, 23) being linked by an articulation (28, 29), **in that** the articulation or articulations (28, 29) linking two consecutive phalanges (21, 22, 23) each comprise an elastic joining piece (36, 37) allowing several degrees of freedom between the two consecutive phalanges (21, 22, 23), **in that** the hand (10) comprises motorization means (50, 51) for a degree of freedom in rotation out of the degrees of freedom made possible by the joining piece (36, 37) linking the consecutive phalanges (21, 22, 23), the motorized degree of freedom in rotation allowing a relative movement of the two consecutive phalanges (21, 22, 23) about an axis (42, 43) at right angles to the main directions (31, 32, 33) of the two consecutive phalanges (21, 22, 23), **in that** the other degrees of freedom out of the degrees of freedom made possible by the joining piece (36, 37) linking the consecutive phalanges (21, 22, 23) are not motorized and **in that** each joining piece (36, 37) linking the consecutive phalanges (21, 22, 23) has a neutral position defined in such a way that the motorization means allow an angular travel of the articulation (28, 29) comprising the elastic joining piece (36, 37) concerned on either side of the neutral position.

3. The hand as claimed in claim 2, **characterized in that** the different elastic joining pieces (35, 36, 37) each have a stiffness that decreases with distance away from the palm (11).

4. The hand as claimed in either one of claims 2 or 3, **characterized in that** the motorization means comprise an actuator (50) common to all the articulations (27, 28, 29) of the at least one finger (13, 14, 15, 16, 17).

5. The hand as claimed in claim 4, **characterized in that** each phalanx (21, 22, 23) comprises a rigid armature (45, 46, 47), **in that** the motorization means comprise a cable (51) guided in each rigid armature (45, 46, 47), the cable (51) passing from one phalanx (21, 22, 23) to the next away from the axis (41, 42, 43) of the motorized degree of freedom in rotation and **in that** the cable (51) is actuated by the common actuator (50).

6. The hand as claimed in claim 5, **characterized in that** the rigid armature (45, 46, 47) is formed in two parts (45a, 45b, 46a, 46b, 47a, 47b) between which the cable (51) is guided.

7. The hand as claimed in any one of claims 4 to 6, **characterized in that** the common actuator (50) is a dual-acting actuator.

8. The hand as claimed in one of the preceding claims, **characterized in that** the phalanx (21, 22, 23) comprises a rigid armature (45, 46, 47) and a flexible piece (56, 57, 58) positioned on an inner face (53) of the finger (14).

9. The hand as claimed in claim 8, **characterized in that** the phalanx (21, 22, 23) comprises a shell (65, 66, 67) positioned on an outer face (54) of the finger (13, 14, 15, 16, 17) and **in that** the shell (65, 66, 67) and the flexible piece (56, 57, 58) comprise complementary forms produced so as to produce an embedment of the rigid armature (45, 46, 47), of the flexible piece (56, 57, 58) and of the shell (65, 66, 67).

10. The hand as claimed in either one of claims 8 or 9, **characterized in that** the flexible piece (56, 57, 58) is formed from two parts (56a, 56b, 57a, 57b, 58a, 58b) surrounding the rigid armature (45, 46, 47).

11. The hand as claimed in any one of claims 8 to 10, **characterized in that** the flexible pieces (56, 57, 58) and the joining piece or pieces (35, 36, 37) are produced by grouping them together in halves longitudinally (35a, 56a, 36a, 57a, 37a, 58a; 35b, 56b, 36b, 57b, 37b, 58b).
